# EUROPEAN PATENT APPLICATION

(11) **EP 4 478 193 A1**
(43) Date of publication of application: **18.12.2024**
(21) Application number: 23834539.1
(22) Date of filing: 26.05.2023
(51) Int. Cl.: G06F 11/07

(54) **METHOD AND APPARATUS FOR DETERMINING GRANULARITY OF REPAIR RESOURCE OF MEMORY FAULT**

(30) Priority: 08.07.2022 CN 202210797526
(71) Applicant: xFusion Digital Technologies Co., Ltd., Zhengzhou, Henan 450000 (CN)
(72) Inventor: ZHANG, Guangbiao, Zhengzhou, Henan 450000 (CN); BAO, Quanyang, Zhengzhou, Henan 450000 (CN); CAO, Rui, Zhengzhou, Henan 450000 (CN); WEI, Weiwei, Zhengzhou, Henan 450000 (CN)
(74) Representative: MERH-IP Matias Erny Reichl Hoffmann Patentanwälte PartG mbB
(86) International application number: PCT/CN2023/096640
(87) International publication number: WO 2024/007765

(57) **Abstract**

A method for repairing a memory fault is provided, and includes: a processing module obtains fault information of a memory, where the fault information includes a type of a fault; the processing module obtains first repair resource information, where the first repair resource information includes a type of a first repair resource, and the first repair resource is capable of repairing the fault; the processing module determines first repair information based on the fault information and the first repair resource information, where the first repair information is used to indicate a BIOS to repair the fault by using a second repair resource, and the second repair resource is a repair resource with a smallest granularity in the first repair resource; and the BIOS repairs the fault based on the first repair information. In the method for repairing a memory fault provided in this application, a fine-grained self-healing resource that almost has no impact on performance is preferentially used to repair the fault. This not only avoids a case in which a decrease in system performance caused by direct use of a large-grained self-healing resource repair means leads to obvious service perception, but also fully uses the fine-grained resource.

## Description

This application claims priority to Chinese Patent Application No. 202210797526.1, filed with the China National Intellectual Property Administration on July 8, 2022 and entitled "METHOD AND APPARATUS FOR DETERMINING GRANULARITY OF REPAIR RESOURCE FOR MEMORY FAULT", which is incorporated herein by reference in its entirety.

### TECHNICAL FIELD

This application relates to the field of server technologies, and in particular, to a method and an apparatus for determining a granularity of a repair resource for a memory fault.

### BACKGROUND

A dynamic random access memory (dynamic random access memory, DRAM) is a type of random access memory that is widely used in the storage field and the IT field. With a higher integration degree and a finer manufacture process of the DRAM, a base failure rate is also increasingly high, and a memory fault has become one of important reasons for server downtime.

### SUMMARY

Embodiments of this application provide a method for repairing a memory fault. For the memory fault, a small-grained self-healing resource that almost has no impact on performance is preferentially used to repair the fault. This not only avoids a case in which a decrease in system performance caused by direct use of a large-grained self-healing resource repair means leads to obvious service perception, but also fully uses the small-grained resource.

According to a first aspect, an embodiment of this application provides a method for determining a granularity of a repair resource for a memory fault. The method is performed by a processing module, and the method includes: obtaining fault information of a memory, where the fault information includes a type of a fault; determining the type of the fault; obtaining repair resource information, where the repair resource information includes a type of a repair resource included in a repair resource set, and the repair resource is capable of repairing the fault; and determining repair information based on the type of the fault and the repair resource information, where the repair information includes at least one of a type of a first repair resource or a granularity of the first repair resource, and the first repair resource is a repair resource with a smallest granularity in the repair resource set.

In other words, in the method for determining a granularity of a repair resource for a memory fault provided in this embodiment of this application, it is determined to preferentially use a repair resource with a smallest granularity in repair resources to repair the fault, so that fault repair has little impact on system performance and the repair resource is fully used.

In a possible implementation, the repair resource information further includes a quantity of repair resources included in the repair resource set, the repair information further includes a quantity of first repair resources.

For example, the repair resource information includes not only a type of the repair resource, but also a quantity of repair resources of each type. Correspondingly, the repair information includes the first repair resource, that is, the repair resource with the smallest granularity, and the quantity of first repair resources. In other words, the repair information indicates a type of a repair resource used for a type of a fault occurring in a memory and a quantity of repair resources of this type, to repair the memory fault.

In another possible implementation, the method for determining a granularity of a repair resource for a memory fault further includes: when a quantity of the first repair resources does not meet a repair resource need of the fault, the repair information further includes at least one of a type of a second repair resource or a granularity of the second repair resource, and the second repair resource is a repair resource with a second smallest granularity in the repair resource set.

In other words, in this possible implementation, it is determined to preferentially use a repair resource with a small granularity. After the repair resource with the small granularity is used up, it is determined that a repair resource with a second smallest granularity is used to repair the memory fault; and so on. When a small-grained self-healing resource that almost has no impact on performance is preferentially used to repair the fault, not only a case in which a decrease in system performance caused by direct use of a large-grained self-healing resource repair means leads to obvious service perception is avoided, but also the small-grained resource is fully used.

In another possible implementation, the repair information further includes a quantity of second repair resources.

In another possible implementation, the fault information includes a first type of the fault and a quantity of faults, that the processing module determines the type of the fault includes: the processing module determines a second type of the fault based on the first type of the fault and the quantity of faults. For example, if 16 (quantity) cell (the first type) faults occur at different locations in one bank of the memory, it is determined that the type of the fault is a bank (the second type) fault.

In another possible implementation, the processing module is a processor or a BMC chip.

According to a second aspect, an embodiment of this application provides a method for repairing a memory fault, including: obtaining, by a processing module, fault information of a memory, where the fault information includes a type of a fault; obtaining, by the processing module, first repair resource information, where the first repair resource information includes a type of a first repair resource, and the first repair resource is capable of repairing the fault; determining, by the processing module, first repair information based on the fault information and the first repair resource information, where the first repair information is used to indicate a BIOS to repair the fault by using a second repair resource, and the second repair resource is a repair resource with a smallest granularity in the first repair resource; and obtaining, by the BIOS, the first repair information, and then repairing, by the BIOS, the fault based on the first repair information.

In the method for repairing a memory fault provided in this embodiment of this application, a small-grained self-healing resource that almost has no impact on performance is preferentially used to repair the fault. This not only avoids a case in which a decrease in system performance caused by direct use of a large-grained self-healing resource repair means leads to obvious service perception, but also fully uses the fine-grained resource.

In a possible implementation, the fault information includes a first type of the fault and a quantity of faults, that the processing module determines the first repair information based on the fault information and the first repair resource information includes: the processing module determines a second type of the fault based on the first type of the fault and the quantity of faults.

For example, if 16 cell faults occur on one bank in the memory, it is determined that the type of the fault is a bank fault.

In another possible implementation, the first repair information includes the type of the first repair resource. For example, the first repair information includes a type of the second repair resource being a PCLS-type repair resource, to indicate the BIOS to repair the fault by using the repair resource of the PCLS type. In other words, the first repair resource information indicates only the type of the second repair resource, so that the BIOS repairs the fault by using the repair resource of this type until repair of the fault is completed.

In another possible implementation, the first repair information further includes a quantity of second repair resources. In other words, the first repair information includes the type of the second repair resource and a quantity of second repair resources. For example, the first repair information includes the type of the second repair resource being a PCLS-type repair resource, and the quantity is 16, to indicate that the BIOS can achieve fault repair by using 16 repair resources of the PCLS type to repair the fault.

In another possible implementation, the method further includes: when a quantity of second repair resources does not meet a repair resource need of the fault, determining second repair information, where the second repair information is used to indicate the BIOS to repair the fault by using a third repair resource, and the third repair resource is a repair resource with a second smallest granularity in the second repair resource. In other words, when the repair resource with the smallest granularity cannot meet the repair resource need of the fault, the repair resource with the second smallest granularity is used to continue to repair the fault, and so on, until repair of the fault is implemented.

In another possible implementation, the fault information further includes a memory address of the fault; and that the BIOS repairs the fault based on the first repair information includes: repairing the fault for a memory corresponding to the memory address based on the first repair information, to implement repair of the fault.

In another possible implementation, the type of the fault includes one or more of a cell fault, a row fault, a col fault, a bank fault, a device fault, and a rank fault.

In another possible implementation, the repair resource includes at least two of a PCLS repair resource, a PPR repair resource, an ADDDC sparing repair resource, a device sparing repair resource, and a rank sparing repair resource. A granularity of the PCLS repair resource is less than a granularity of the PPR repair resource, the granularity of the PPR repair resource is less than a granularity of the ADDDC sparing repair resource, the granularity of the ADDDC sparing repair resource is less than a granularity of the device sparing repair resource, and the granularity of the device sparing repair resource is less than a granularity of the rank sparing repair resource.

Optionally, the processing module is a processor of a server; in other words, steps performed by the processing module may be implemented in the processor. Alternatively, the processing module is an out-of-band management baseboard management controller (BaseBoard Management Controller, BMC) of a server; in other words, steps performed by the processing module may be implemented in the BMC.

According to a third aspect, an embodiment of this application provides an apparatus for determining a granularity of a repair resource for a memory fault, including a processing module. The processing module includes:
a first obtaining unit, configured to obtain fault information of a memory, where the fault information includes a type of a fault;
a first determining unit, configured to determine the type of the fault;
a second obtaining unit, configured to obtain repair resource information, where the repair resource information includes a type of a repair resource included in a repair resource set, and the repair resource is capable of repairing the fault; and
a second determining unit, configured to determine repair information based on the type of the fault and the repair resource information, where the repair information includes at least one of a type of a first repair resource or a granularity of the first repair resource, and the first repair resource is a repair resource with a smallest granularity in the repair resource set.

In a possible implementation, the repair resource information further includes a quantity of repair resources included in the repair resource set, and the repair information further includes a quantity of first repair resources.

In another possible implementation, the second determining unit is further configured to: when the quantity of the first repair resources does not meet a repair resource need of the fault, the repair information further includes at least one of a type of a second repair resource or a granularity of the second repair resource, where the second repair resource is a repair resource with a second smallest granularity in the repair resource set.

In another possible implementation, the repair information further includes a quantity of second repair resources.

In another possible implementation, the fault information includes a first type of the fault and a quantity of faults, and the first determining unit is specifically configured to:
determine a second type of the fault based on the first type of the fault and the quantity of faults.

In another possible implementation, the processing module is a processor or a BMC chip.

According to a fourth aspect, an embodiment of this application provides an apparatus for repairing a memory fault, including a processing module and a BIOS module;
the processing module includes:
a first obtaining unit, configured to: obtain fault information of a memory, where the fault information includes a type of a fault; and
obtain first repair resource information, where the first repair resource information includes a type of the first repair resource, and the first repair resource is capable of repairing the fault; and
a determining unit, configured to determine first repair information based on the fault information and the first repair resource information, where the first repair information is used to indicate a BIOS to repair the fault by using a second repair resource, and the second repair resource is a repair resource with a smallest granularity in the first repair resource; and
the BIOS module includes:
   a second obtaining unit, configured to obtain the first repair information; and
   a repair unit, configured to repair the fault based on the first repair information. In a possible implementation, the fault information includes a first type of the fault and a quantity of faults; and
   the determining unit is further configured to determine a second type of the fault based on the first type of the fault and the quantity of faults.

In another possible implementation, the first repair information includes a type of the second repair resource.

In another possible implementation, the first repair information further includes a quantity of second repair resources. In another possible implementation, the determining unit is further configured to:
when the quantity of second repair resources does not meet a repair resource need of the fault, determine second repair information, where the second repair information is used to indicate the BIOS to repair the fault by using a third repair resource, and the third repair resource is a repair resource with a second smallest granularity in the second repair resource.

In another possible implementation,
the fault information further includes a memory address of the fault; and
the repair unit is specifically configured to:
   repair the fault for a memory corresponding to the memory address based on the first repair information, to implement repair of the fault.

In another possible implementation, the type of the fault includes one or more of a cell fault, a row fault, a col fault, a bank fault, a device fault, and a rank fault.

In another possible implementation, the repair resource includes at least two of a PCLS repair resource, a PPR repair resource, an ADDDC sparing repair resource, a device sparing repair resource, and a rank sparing repair resource.

A granularity of the PCLS repair resource is less than a granularity of the PPR repair resource, the granularity of the PPR repair resource is less than a granularity of the ADDDC sparing repair resource, the granularity of the ADDDC sparing repair resource is less than a granularity of the device sparing repair resource, and the granularity of the device sparing repair resource is less than a granularity of the rank sparing repair resource.

In another possible implementation, the processing module is a processor of a server or a processor of a BMC.

According to a fifth aspect, an embodiment of this application provides a chip, including at least one processor and a communication interface, and the processor is configured to perform the method according to the first aspect or the second aspect.

According to a sixth aspect, an embodiment of this application provides a computing device, including a processor and a memory, and the processor is configured to perform the method according to the first aspect or the second aspect, to repair a fault in the memory.

According to a seventh aspect, an embodiment of this application provides a computing device, including a processor, a BMC, and a memory, and either of the processor and the BMC is configured to perform the method according to the first aspect or the second aspect, to repair a fault in the memory.

According to an eighth aspect, an embodiment of this application provides a computing device, including a processing unit, a BIOS, and a memory;
the BIOS is configured to obtain first fault information of the memory and first repair resource information;
the processing module is configured to: obtain second fault information of the memory, where the second fault information includes a type of a fault; determine the type of the fault; obtain second repair resource information, where the second repair resource information includes a type of a repair resource included in a repair resource set, and the repair resource is capable of repairing the fault; and determine repair information based on the type of the fault and the second repair resource information, where the repair information includes at least one of a type of a first repair resource or a granularity of the first repair resource, and the first repair resource is a repair resource with a smallest granularity in the repair resource set; and
the BIOS is further configured to obtain the first repair information, and is configured to repair the fault based on the first repair information.

In a possible implementation, the processing module is a processor or a BMC chip.

According to a ninth aspect, an embodiment of this application provides a computer-readable storage medium. A computer program is stored on the computer-readable storage medium, and when the computer program is executed by a processor, the method according to the first aspect or the second aspect is implemented.

According to a tenth aspect, an embodiment of this application further provides a computer program or a computer program product. The computer program or the computer program product includes instructions, and when the instructions are executed, a computer is enabled to perform the method according to the first aspect or the second aspect.

### BRIEF DESCRIPTION OF DRAWINGS

FIG. 1 is a schematic diagram of a hardware structure of a computing device that can perform a method for repairing a memory fault according to an embodiment of this application;
FIG. 2 is a flowchart of a method for determining a granularity of a repair resource for a memory fault according to an embodiment of this application;
FIG. 3 is a flowchart of a method for repairing a memory fault according to an embodiment of this application;
FIG. 4 is a schematic diagram of an implementation process of a method for repairing a memory fault during burst reporting of memory faults according to an embodiment of this application;
FIG. 5 is a schematic diagram of an implementation process of a method for repairing a memory fault during successive reporting of memory faults according to an embodiment of this application; and
FIG. 6 is a schematic diagram of a structure of an apparatus for determining a granularity of a repair resource for a memory fault according to an embodiment of this application.

### DESCRIPTION OF EMBODIMENTS

Technical solutions in this application are further described in detail below by using the accompanying drawings and embodiments.

To solve a memory fault problem, one solution is as follows: an out-of-band management baseboard management controller (BaseBoard Management Controller, BMC) of a server collects fault information, performs fault prediction, and defines a fault feature mode and a repairing mechanism: for example, for a cell fault, repairing is performed by using a partial cache line sparing (partial cache line sparing, PCLS) repair resource; for a row fault, repairing is performed by using a PPR repair resource; for a col fault and a bank fault, repairing is performed by using an ADDDC sparing repair resource; for a device fault, repairing is performed by using a device sparing repair resource; for a rank fault, repairing is performed by using a rank sparing repair resource; and sends a request to the BIOS to execute the corresponding request. The BIOS executes a corresponding isolation mechanism based on a repair request to complete a system repair.

A main feature of this solution is that corresponding self-healing mechanisms are executed for different fault types, but preferential use of repair resources with different granularities in a memory is not considered. For a fault that can be self-healed by using a plurality of small-grained repair resources (for example, a plurality of PCLS repair resources may be used to repair the fault), when a fault repair resource (for example, ADDDC Sparing) with a relatively large granularity in the memory is preferentially used to repair the fault, small-grained repair resources (for example, PCLS) are unavailable. This not only wastes the remaining fine-grained repair resources, but also affects system performance, leading to obvious service perception.

In other words, in this solution, during repairing of a memory fault, a repair resource with a fixed granularity is executed for a fault of a fixed type, and preferential use of repair resources with different granularities is not considered. Consequently, use of the repair resource is not careful enough, and not only the repair resource is wasted, but also system performance is affected, which in turn leads to obvious service perception.

It may be understood that a memory includes a plurality of channels (channel), each channel includes a plurality of dual inline storage modules (dual inline memory modules, DIMM), one DIMM includes a plurality of ranks (memory modules), one rank includes a plurality of devices (memory particles), one device includes a plurality of banks (memory banks), one bank includes a plurality of rows (memory rows) or cols (memory columns), and one row or col includes a plurality of cells (memory bits). A cell fault, a row Row fault, a column Col fault, a bank fault, a particle Device fault, and a rank fault respectively represent that the memory is faulty at a cell granularity, a row granularity, a col granularity, a bank granularity, a device granularity, and a rank granularity. The granularity is used to measure a size of memory space. For example, a granularity of a DIMM is greater than that of a rank, the granularity of a rank is greater than that of a device, the granularity of a device is greater than that of a bank, the granularity of a bank is greater than that of a row/col, and the granularity of a row or col is greater than that of a cell.

Generally, when a fault occurs in a cell in the memory, the fault is referred to as a cell fault; when a fault occurs in a row/col (for example, if a plurality of cell faults occur in a row/col, it is determined that a fault occurs in the row/col), the fault is referred to as a row fault/col fault; when a fault occurs in a bank, the fault is referred to as a bank fault; when a fault occurs in a device, the fault is referred to as a device fault; and when a fault occurs in a rank, the fault is referred to as a rank fault. Correspondingly, a size of memory space in which a fault occurs, or memory faults may also be classified into different granularities. For example, faults with different granularities in the memory may be classified into a cell fault, a row fault/col fault, a bank fault, a device fault, and a rank fault from small to large.

The memory is an important part of a computing device. During use, a fault usually occurs for various reasons. To ensure that running of a system is not affected after the fault occurs in the memory, the memory is usually disposed with redundancy. For example, there is a redundant row or col on each bank. When a fault occurs at a row on the bank, the redundant row is used to replace the faulty row. A redundant cell, row, col, bank, device, rank, and the like that may exist in the memory are referred to as repair resources. Correspondingly, a cell repair resource includes a partial cache line sparing (partial cache line sparing, PCLS) repair resource, a row repair resource or a col repair resource repairing includes a post-package repair (post-package repair, PPR) repair resource, a bank repair resource includes an adaptive double device data correction sparing (adaptive double device data correction sparing, ADDDC Sparing) repair resource, a device repair resource includes a device sparing repair resource, and a rank repair resource includes a rank sparing repair resource. When the granularity is used to describe the repair resource, the granularity is used to measure a size of the repair resource. For example, a granularity of a PCLS fault repair resource is less than that of a PPR fault repair resource. The repair resource with a larger granularity leads to greater impact on system performance and more obvious service perception.

For problems in the foregoing solution and a conventional technology, an embodiment of this application provides a method for repairing a memory fault. A fault repair resource with a small granularity is preferentially used to repair a memory fault. After the fault repair resource with a small granularity is used up, a repair resource with a second smallest granularity is used to repair the memory fault; and so on. When a small-grained self-healing resource that almost has no impact on performance is preferentially used to repair the fault, not only a case in which a decrease in system performance caused by direct use of a large-grained self-healing resource repair means leads to obvious service perception is avoided, but also the small-grained resource is fully used.

It should be explained that, if no special description is provided, meanings of "repair resource" and "self-healing resource" mentioned in context of embodiments of this application are the same, and meanings of "repair" and "self-healing" are the same.

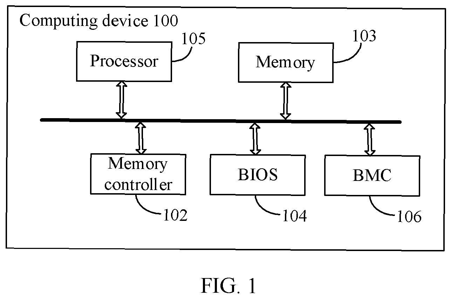

FIG. 1 is a schematic diagram of a hardware structure of a computing device that can perform a method for repairing a memory fault according to an embodiment of this application. As shown in FIG. 1, the computing device includes a processor 105, a memory controller 102, a memory 103, and a basic input output system (basic input output system, BIOS) chip 104. The processor 105 and the memory controller 102 may be integrated together, or may be disposed independently. The memory 103 is configured to store data required by an operation of the processor, and may further exchange data with an external storage such as a hard disk in the computing device. For example, the memory 103 may cache an operating system, a software application program, and the like. The memory controller 102 is configured to manage the data/program in the memory 103. The BIOS chip 104 is configured to detect various hardware in the computing device 100, such as a CPU, a memory, and a mainboard.

In another possible embodiment, the computing device 100 may further include a baseboard management controller (baseboard management controller, BMC) 106, configured to perform an operation such as remote management on the computing device.

The computing device may be a terminal device, such as a personal computer, a smartphone, or a smart wearable device.

The computing device may be alternatively a server, for example, a server of an X86 architecture, and may be specifically a blade server, a high-density server, a rack server, a high-performance server, or the like.

It should be understood that, in this embodiment of this application, the processor 105 may be a central processing unit CPU, or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like.

The memory 103 is a volatile memory, and may be a random access memory (random access memory, RAM) and is used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DRRAM).

It should be understood that a computing device 100 according to this embodiment of this application may perform the following method for repairing a memory fault provided in embodiments of this application. For ease of description, the processor 105 and the BMC 107 may be collectively referred to as a processing module. In other words, when the processing module is mentioned in the following descriptions, the processing module may be the processor 105 or the BMC 106.

Specifically, the BIOS is configured to collect memory fault information (including a location at which a memory fault occurs, a quantity of faults, a type of the fault, and the like) and fault repair resource information. The processing module is configured to determine a repair strategy for the memory fault based on the fault information and the fault repair resource information, and send the repair strategy to the BIOS. The BIOS repairs the memory fault based on the fault repair strategy.

For example, the processing module collects the memory fault information reported by the BIOS, and collects and counts a quantity of memory fault repair resources reported by the BIOS. A fault self-healing reasoning and decision module in the processing module preferentially defines, based on the memory fault information and the fault repair resource information, a strategy of repairing the memory fault by using a fine-grained fault repair resource, sends a request for this fault repair mechanism to the BIOS, and correspondingly repairs the fault.

It should be noted that the BIOS may be a storage, or may be a chip that has a function. For ease of description, in the following descriptions of this application, a function implemented by the BIOS may be executed by the processor by invoking a program stored in a BIOS memory, or may be directly executed by a BIOS chip.

The computing device shown in FIG. 1 is merely a schematic diagram of a hardware structure of a computing device that can perform the method for repairing a memory fault provided in embodiments of this application. The computing device does not constitute a limitation on a computing device to which embodiments of this application are applicable. For example, the computing device may further include a persistent storage medium, a communication interface, a communication line, and the like that are not shown in FIG. 1.

A server is used as an example of the computing device below to describe a solution provided in embodiments of this application. Other computing devices are similar to the server, and details are not described herein again.

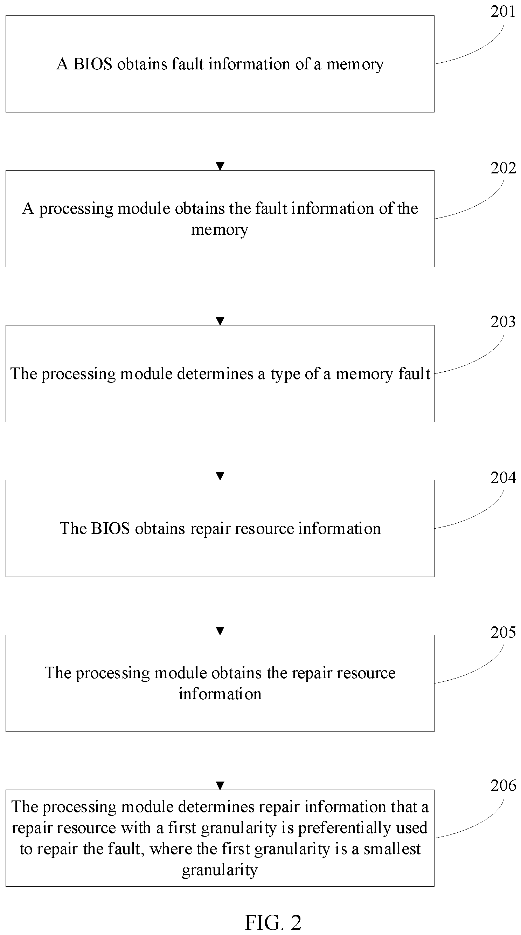

FIG. 2 is a flowchart of a method for determining a repair granularity for a memory fault according to an embodiment of this application. The method may be performed in the server shown in FIG. 1, to determine a repair granularity for a memory fault and avoid waste of a repair resource. As shown in FIG. 2, an embodiment of this application provides a method for determining a granularity of a repair resource for a memory fault, including at least step S201 to step S206.

In step S201, a BIOS obtains fault information of a memory.

The BIOS obtains fault information that exists in the memory, including, for example, information such as a type of a fault, a memory address of the fault, and a quantity of faults.

In step S202, a processing module obtains the fault information of the memory.

The processing module may obtain the fault information of the memory by receiving the fault information of the memory that is reported by the BIOS. Or, the processing module may obtain the fault information of the memory by sending a request to the BIOS, for example, the processing module sends a request to the BIOS, where the request is used to request to obtain the fault information of the memory, and the BIOS sends the fault information of the memory to the processing module in response to the request.

Faults in the memory may be classified into a plurality of different types based on granularities. For example, fault types of the memory may include one or more of a cell fault, a row Row fault, a column col fault, a bank fault, a particle Device fault, and a rank fault. A specific granularity of a type of the fault in the memory is not limited in the embodiments of this application. This is merely an example for description herein. With the progress of technologies, a type of a fault with a smaller or larger granularity may occur in the future.

It should be noted that the processing module may obtain all fault information obtained by the BIOS, or may obtain a part that is of all fault information obtained by the BIOS and that includes at least the type of the fault. For example, the fault information obtained by the BIOS includes the type of the fault, a memory address of the fault, and a quantity of faults. The processing module may obtain only the type of the fault, or the processing module may obtain the type of the fault and the quantity of faults.

In step S203, the processing module determines a type of a memory fault.

The processing module obtains the fault information of the memory. When the fault information includes the type of the fault and a quantity of the type of the fault, the processing module may determine a type of a memory fault based on the type of the fault and the quantity of the type of the fault. For example, if the fault information obtained by the processing module from the BIOS is that 16 cell faults occur at different locations in one bank of the memory, it is determined that the type of the memory fault is a bank fault.

In another example, the processing module may further directly obtain the type of the fault from the BIOS. For example, if the type of the fault that is reported by the BIOS to the processing module is a cell fault, the processing module determines that the type of the fault is a cell fault, in other words, the processing module processes, in real time, the fault information reported by the BIOS.

Optionally, the processing module may further determine a quantity of memory faults.

In step S204, the BIOS obtains repair resource information.

The BIOS detects the memory to obtain a repair resource in the memory, and the repair resource may be used to repair the memory fault.

The memory is an important part of a computing device. During use, a fault usually occurs for various reasons. To ensure that running of a system is not affected after the fault occurs in the memory, the memory is usually disposed with redundancy. For example, there is a redundant row or col on each bank. When a fault occurs at a row on the bank, the redundant row is used to replace the faulty row. A redundant cell, row, col, bank, device, rank, and the like that may exist in the memory are referred to as repair resources.

The BIOS obtains the repair resource information, that is, obtains information about a cell, a row, a col, a bank, a device, and a rank that are redundant in the memory.

The BIOS may obtain types of all repair resources in the memory by detecting the memory.

It is easy to understand that types of the repair resource may include a PCLS repair resource, a PPR repair resource, an ADDDC sparing repair resource, a device sparing repair resource, and a rank sparing. A granularity of the PCLS repair resource is less than a granularity of the PPR repair resource, the granularity of the PPR repair resource is less than a granularity of the ADDDC sparing repair resource, the granularity of the ADDDC sparing repair resource is less than a granularity of the device sparing repair resource, and the granularity of the device sparing repair resource is less than a granularity of the rank sparing repair resource. A correspondence between a granularity of the memory fault and a granularity of the repair resource is usually as follows: the cell fault corresponds to the PCLS repair resource, the row Row fault/column Col fault corresponds to the PPR repair resource, the bank fault corresponds to the ADDDC sparing repair resource, the device fault corresponds to the device sparing repair resource, and the rank fault corresponds to the rank sparing repair resource.

Optionally, the BIOS may further obtain a quantity of all repair resources in the memory. For example, there are sixteen PCLS repair resources, eight PPR repair resources, and four ADDDC sparing repair resources.

In step S205, the processing module obtains the repair resource information.

The processing module may obtain the repair resource information by receiving the repair resource information reported by the BIOS.

The processing module may also send an obtaining request to the BIOS to obtain the repair resource information.

It should be noted that the processing module may obtain all information about the repair resource obtained by the BIOS, or may obtain a part that is of all information about the repair resource obtained by the BIOS and that includes at least a type of the repair resource. For example, the information about the repair resource obtained by the BIOS includes the type of the repair resource and a quantity of repair resources. The processing module may obtain only the type of the repair resource, or the processing module may obtain the type of the repair resource and the quantity of repair resources.

In an example, the processing module may send, to the BIOS based on the type of the fault, a request for obtaining repair resource information whose granularity is less than or equal to a granularity of the type of the fault. For example, if the type of the fault is a bank, the processing module sends, to the BIOS, information for obtaining a repair resource whose granularity is less than or equal to a granularity of an ADDDC sparing repair resource (including a PCLS fault repair resource, a PPR fault repair resource, and an ADDDC sparing fault repair resource), and the repair resource information includes the type of the repair resource.

In another example, the processing module obtains all repair resource information in the memory from the BIOS.

It should be noted that the processing module may alternatively obtain a part that is of the partial repair resource information obtained by the BIOS and that includes at least the type of the repair resource.

In step S206, the processing module determines repair information that a repair resource with a first granularity is preferentially used to repair the fault, where the first granularity is a smallest granularity.

The processing module determines repair information for the type of the fault based on the fault repair resource information and the fault information of the memory. The repair information is that in repair resources of the memory, a repair resource with a smallest granularity in currently available fault repair resources is preferentially used to repair the type of fault. The repair information may include a granularity of the repair resource. Optionally, the repair information may include the type of the repair resource, for example, ADDDC sparing; or the repair information may include the granularity of the repair resource and the type of the repair resource. Optionally, the repair information may further include the granularity of the repair resource and a quantity of repair resources, or the repair information may further include the type of the repair resource and a quantity of repair resources, or the repair information may further include the granularity of the repair resource, the type of the repair resource, and a quantity of repair resources.

For example, when the type of the fault in the memory is a bank fault, and when the obtained repair resources include the PCLS repair resource, the PPR repair resource, and the ADDDC sparing repair resource, it is determined that a PCLS repair resource with a smallest granularity is preferentially used to repair the bank fault.

In another example, if the fault information of the memory further includes a memory address of the fault, the repair information may also include the memory address of the fault.

In an example, when a quantity of repair resources with the smallest granularity meets a repair resource need of the fault, repair information that the repair resource with the smallest granularity is used to repair the fault is determined. When the quantity of repair resources with the smallest granularity does not meet the repair resource need of the fault, a repair resource with a second smallest granularity may be used to repair the fault, and so on, until repair of the fault is completed.

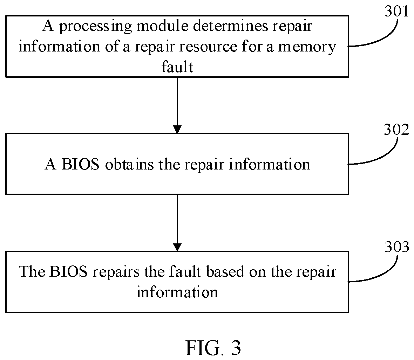

FIG. 3 is a flowchart of a method for repairing a memory fault according to an embodiment of this application. The method may be performed in the server shown in FIG. 1, to repair the memory fault. As shown in FIG. 3, at least step S301 to step S303 are included.

In step 301, a processing module determines repair information of a repair resource for a memory fault. Specifically, step 201 to step 206 shown in FIG. 3 may be used, and details are not described herein again.

In step S302, a BIOS obtains the repair information.

After determining the repair information, the processing module sends the repair information to the BIOS, and the repair information is used to indicate a repair strategy executed by the BIOS for the memory fault.

In step S303, the BIOS repairs the fault based on the repair information.

The processing module sends the repair information to the BIOS, so that the BIOS repairs the fault based on the repair information.

When the repair information is a granularity of a repair resource, the BIOS may repair the fault by using a repair resource with a corresponding granularity for a plurality of times until repair of the fault is completed.

When the repair information is a type of a repair resource, the BIOS may repair the fault by using a repair resource of a corresponding type for a plurality of times until repair of the fault is completed.

When the repair information includes a granularity of a repair resource and a type of the repair resource, the BIOS may repair the fault by using a repair resource with a corresponding granularity for a plurality of times until repair of the fault is completed, or the BIOS may repair the fault by using a repair resource of a corresponding type for a plurality of times until repair of the fault is completed.

When the repair information includes a granularity of a repair resource and a quantity of repair resources, the BIOS may repair the fault by using a corresponding quantity of repair resources with a corresponding granularity.

When the repair information includes a type of a repair resource and a quantity of repair resources, the BIOS may repair the fault by using a corresponding quantity of repair resources of a corresponding type. For example, if the repair information sent by the processing module to the BIOS is a PCLS repair resource and eight, the BIOS repairs the fault by using eight PCLSs.

When the repair information includes a granularity of the repair resource, a type of the repair resource, and a quantity of repair resources, the BIOS may repair the fault by using a corresponding quantity of repair resources with a corresponding granularity, or the BIOS may repair the fault by using a corresponding quantity of repair resources of a corresponding type.

When the repair information includes a memory address of the fault, the BIOS may repair the fault for a memory corresponding to the memory address.

In an example, each time the BIOS detects a fault, the BIOS reports fault information to the processing module; the processing module receives the fault information; the BIOS detects repair resource information in the memory; the processing module determines repair information based on the fault information and the repair resource information, and sends the repair information to the BIOS; and the BIOS repairs the fault based on the repair information. In other words, when the BIOS detects a plurality of faults, interaction is performed between the processing module and the BIOS for a plurality of times. The processing module sends, for fault information reported each time, repair information for the fault information, and the BIOS repairs the fault by using the repair information.

In another example, the BIOS detects a plurality of faults (for example, 16 faults), and reports information about the detected plurality of faults to the processing module, the processing module receives the fault information, and the processing module determines a type of the fault based on the fault information. For example, if 17 cell faults are reported in one bank, it is determined that the type of the fault is a bank fault. The BIOS detects repair resource information in the memory, and the processing module determines the repair information based on the type of the fault and the repair resource information, and sends the repair information to the BIOS. The BIOS repairs the fault of this type based on the repair information. In other words, when the BIOS detects a plurality of faults, the BIOS reports the plurality of faults together to the processing module. The processing module determines a type of the fault for reported fault information, and then sends repair information for the type of the fault. The BIOS repairs the fault of this type by using the repair information.

Two examples are used below to describe specific implementation of the method for repairing a memory fault provided in this embodiment of this application when memory faults actually occur.

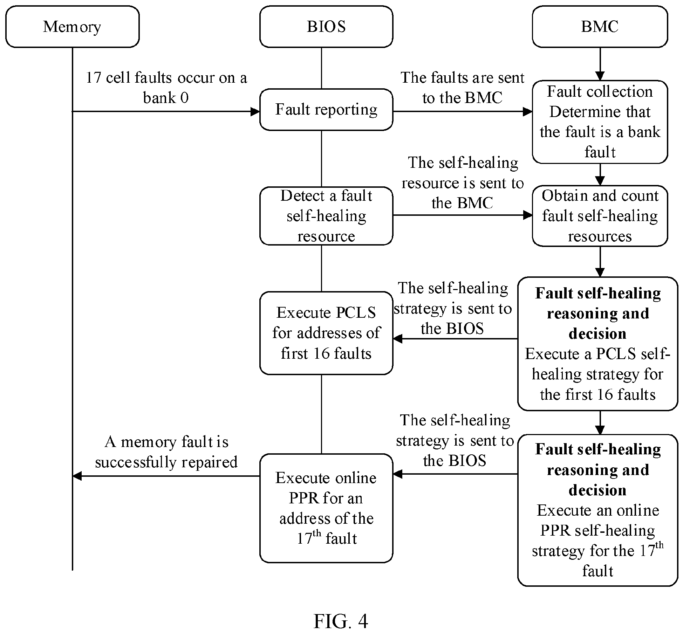

In an example, memory faults are reported in burst. It is assumed that, in a system, a remaining quantity of bit-level self-healing resources PCLS is 16, a remaining quantity of row-level self-healing resources online PPR is 2, and 17 cell faults occur on a same bank 0 of the memory. Therefore, a specific implementation of this solution is shown in FIG. 4.

A BIOS detects a memory and obtains fault information in the memory. For example, 17 cell faults occur on the bank 0.

The BIOS reports the obtained fault information in the memory to a BMC.

The BMC collects 17 pieces of fault information reported by the BIOS and determines that a fault is a bank fault.

The BIOS detects fault self-healing resource information in the memory, and sends the fault self-healing resource information to the BMC.

The BMC collects the fault self-healing resource information reported by the BIOS, and learns through counting that a remaining quantity of fault self-healing resources PCLS repair resources is 16 and a remaining quantity of online PPR repair resources is 2.

The BMC performs fault self-healing reasoning and decision based on the fault type information and the self-healing resource information, determines to execute a PCLS repair strategy for the first 16 faults, and sends the repair strategy to the BIOS.

The BMC performs fault self-healing reasoning and decision based on the fault type information and the self-healing resource information, determines not to directly execute an ADDDC sparing repair strategy at a bank level, determines to execute an online PPR repair strategy for the 17^{th} fault, and sends the repair strategy to the BIOS.

After executing the repair strategy, the BIOS completes fault repair for the memory.

In the method for repairing a memory fault provided in this embodiment of this application, for faults reported in burst in the memory, the memory fault is a bank fault, and a bank-level ADDDC sparing fault repair means is not directly used, but a small-grained PCLS and online PPR that almost have no impact on performance are preferentially used to repair faults that already exist in the bank. This not only avoids a case in which a decrease in system performance caused by use of the ADDDC sparing repair means leads to obvious service perception, but also fully uses small-grained repair resources.

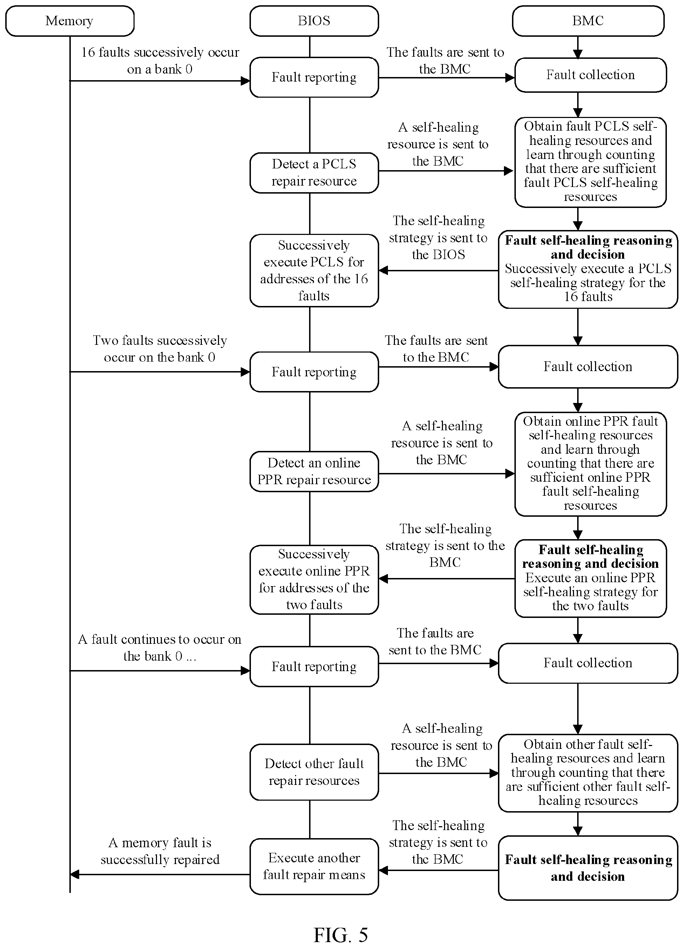

In another example, memory faults are reported successively. It is assumed that, in a system, a remaining quantity of bit-level self-healing resources PCLS is 16, and a remaining quantity of row-level self-healing resources online PPRs is 2. A specific implementation of this solution is shown in FIG. 5.

A BIOS detects a memory and obtains fault information in the memory. For example, 16 cell faults occur on a bank 0.

The BIOS reports the obtained fault information in the memory to a BMC.

The BMC successively collects 16 pieces of fault information reported by the BIOS.

The BIOS detects fault self-healing resource information in the memory, and sends the fault self-healing resource information to the BMC.

The BMC collects the fault self-healing resource information reported by the BIOS, and learns through counting that a remaining quantity of fault self-healing resources PCLS repair resources is 16.

The BMC performs fault self-healing reasoning and decision based on the fault type information and the self-healing resource information, preferentially executes a PCLS repair strategy for the first 16 faults in sequence, and sends the repair strategy to the BIOS.

The BIOS continues to detect the memory to obtain the fault information in the memory. For example, two cell faults occur on the bank 0.

The BIOS reports the obtained fault information in the memory to the BMC.

The BMC successively collects two pieces of fault information reported by the BIOS.

The BMC collects the fault self-healing resource information reported by the BIOS, and learns through counting that a remaining quantity of fault self-healing resources (online PPR repair resources) is 2.

The BMC performs fault self-healing reasoning and decision based on the fault type information and the self-healing resource information, preferentially executes an online PPR repair strategy for the two faults in sequence, and sends the repair strategy to the BIOS.

The BMC successively collects information, reported by the BIOS, that the fault continues to occur in the memory.

The BMC collects other fault self-healing resource information reported by the BIOS, and learns through counting that there are sufficient other fault self-healing resources (for example, the other fault self-healing resources are ADDDC sparing).

The BMC performs fault self-healing reasoning and decision based on the fault type information and the self-healing resource information, determines a self-healing strategy that is suitable for another fault (for example, a bank fault), and sends the repair strategy (for example, the repair strategy is ADDDC sparing) to the BIOS.

After executing the repair strategy, the BIOS completes fault repair for the memory.

In the method for repairing a memory fault provided in this embodiment of this application, for faults successively occurring in the memory, a fine-grained self-healing resource that almost has no impact on performance is preferentially used to repair the faults. This not only avoids a case in which a decrease in system performance caused by direct use of a large-grained self-healing resource repair means leads to obvious service perception, but also fully uses the fine-grained resources.

Based on a same concept as the foregoing embodiment of the method for repairing a memory fault, an embodiment of this application further provides an apparatus 600 for repairing a memory fault. The apparatus 600 for repairing a memory fault includes units or modules configured to implement steps in the method for repairing a memory fault shown in FIG. 2 to FIG. 5.

When there is no BMC in a computing device, for example, when there is no BMC in a server, a processing module is a processor of the server, and the step performed by the BMC in the foregoing descriptions may be implemented in the processor of the server. Therefore, when the processing module is a processor, for specific implementation of the method for repairing a memory fault provided in embodiments of this application, refer to the foregoing descriptions. For brevity, details are not described herein again.

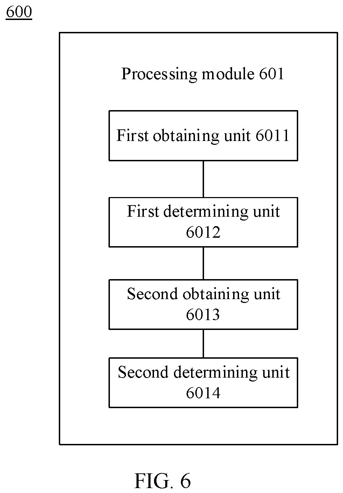

FIG. 6 is a schematic diagram of a structure of an apparatus for determining a repair granularity for a memory fault according to an embodiment of this application. The apparatus may be performed by a processing module. As shown in FIG. 6, an apparatus 600 for determining a granularity of a repair resource for a memory fault includes at least:
a processing module 601.

The processing module 601 includes:
a first obtaining unit 6011, configured to obtain fault information of a memory, where the fault information includes a type of a fault;
a first determining unit 6012, configured to determine the type of the fault;
a second obtaining unit 6013, configured to obtain repair resource information, where the repair resource information includes a type of a repair resource included in a repair resource set, and the repair resource is capable of repairing the fault; and
a second determining unit 6014, configured to determine repair information based on the type of the fault and the repair resource information, where the repair information includes at least one of a type of a first repair resource or a granularity of the first repair resource, and the first repair resource is a repair resource with a smallest granularity in the repair resource set.

In a possible implementation, the repair resource information further includes a quantity of repair resources included in the repair resource set, and the repair information further includes a quantity of first repair resources.

In another possible implementation, the second determining unit 6014 is further configured to: when the quantity of first repair resources does not meet a repair resource need of the fault, the repair information further includes at least one of a type of a second repair resource or a granularity of the second repair resource, where the second repair resource is a repair resource with a second smallest granularity in the repair resource set.

In another possible implementation, the repair information further includes a quantity of second repair resources.

In another possible implementation, the fault information includes a first type of the fault and a quantity of faults, and the first determining unit 6012 is specifically configured to:
determine a second type of the fault based on the first type of the fault and the quantity of faults.

In another possible implementation, the processing module is a processor or a BMC chip. The apparatus 600 for repairing a memory fault in this embodiment of this application may correspond to performing the method described in embodiments of this application. In addition, the foregoing and other operations and/or functions of the modules in the apparatus 600 for repairing a memory fault are separately used to implement corresponding procedures of the methods in FIG. 2 to FIG. 5. For brevity, details are not described herein again.

It should be explained that the method for determining a repair granularity for a memory fault provided in embodiments of this application may be performed by a processor of a server. For example, the processor invokes program code, and the program code includes one or more software modules. A computing device executes the program code by using the processor, to implement the method for determining a repair granularity for the memory fault provided in embodiments of this application.

The method for repairing a memory fault provided in embodiments of this application may be performed by an out-of-band management BMC in FIG. 2. For example, the out-of-band management BMC stores program code corresponding to the method for determining a repair granularity for a memory fault provided in embodiments of this application. The program code includes one or more software modules. A computing device executes the program code by using the out-of-band management BMC, to implement the method for determining a repair granularity for a memory fault provided in embodiments of this application.

An embodiment of this application provides a computer-readable storage medium. The computer-readable storage medium stores a computer program, and when the computer instruction is executed by a processor, the method mentioned above is implemented.

An embodiment of this application provides a chip. The chip includes at least one processor and an interface, the at least one processor determines program instructions or data by using the interface, and the at least one processor is configured to execute the program instructions to implement the method mentioned above.

An embodiment of this application provides a computer program or a computer program product. The computer program or the computer program product includes instructions, and when the instructions are executed, a computer is enabled to perform the method mentioned above.

A person of ordinary skill in the art may be further aware that, in combination with examples described in embodiments disclosed herein, units and algorithm steps can be implemented by electronic hardware, computer software, or a combination thereof. To clearly describe interchangeability between hardware and software, compositions and steps of the examples have been generally described above based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

Method or algorithm steps described in the embodiments disclosed herein may be implemented by hardware, a software module executed by a processor, or a combination thereof. The software module may be disposed in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.

In the foregoing specific implementations, the objective, technical solutions, and beneficial effects of this application are further described in detail. It should be understood that the foregoing descriptions are merely specific implementations of this application, but are not intended to limit the protection scope of this application. Any modification, equivalent replacement, or improvement made without departing from the spirit and principle of this application should fall within the protection scope of this application.

## Claims

1. A method for determining a granularity of a repair resource for a memory fault, wherein the method is performed by a processing module, and the method comprises:
obtaining, by the processing module, fault information of a memory, wherein the fault information comprises a type of a fault;
determining, by the processing module, the type of the fault;
obtaining, by the processing module, repair resource information, wherein the repair resource information comprises a type of a repair resource in a repair resource set; and
determining, by the processing module, repair information based on the type of the fault and the repair resource information, wherein the repair information comprises at least one of a type of a first repair resource or a granularity of the first repair resource, and the first repair resource is a repair resource with a smallest granularity in the repair resource set.

2. The method according to claim 1, wherein the repair resource information further comprises a quantity of repair resources in the repair resource set, the repair information further comprises a quantity of first repair resources.

3. The method according to claim 2, wherein the method further comprises: when the quantity of the first repair resources does not meet a repair resource need of the fault, the repair information further comprises at least one of a type of a second repair resource or a granularity of the second repair resource, wherein the second repair resource is a repair resource with a second smallest granularity in the repair resource set.

4. The method according to claim 3, wherein the repair information further comprises a quantity of second repair resources.

5. The method according to any one of claims 1 to 4, wherein the fault information comprises a first type of the fault and a quantity of faults, and the determining, by the processing module, the type of the fault comprises:
determining, by the processing module, a second type of the fault based on the first type of the fault and the quantity of faults.

6. The method according to any one of claims 1 to 5, wherein the processing module is a processor or a BMC chip.

7. An apparatus for determining a granularity of a repair resource for a memory fault, comprising a processing module, wherein
the processing module comprises:
a first obtaining unit, configured to obtain fault information of a memory, wherein the fault information comprises a type of a fault;
a first determining unit, configured to determine the type of the fault;
a second obtaining unit, configured to obtain repair resource information, wherein the repair resource information comprises a type of a repair resource comprised in a repair resource set, and the repair resource is capable of repairing the fault; and
a second determining unit, configured to determine repair information based on the type of the fault and the repair resource information, wherein the repair information comprises at least one of a type of a first repair resource or a granularity of the first repair resource, and the first repair resource is a repair resource with a smallest granularity in the repair resource set.

8. The apparatus according to claim 7, wherein the repair resource information further comprises a quantity of repair resources comprised in the repair resource set, the repair information further comprises a quantity of first repair resources.

9. The apparatus according to claim 8, wherein the second determining unit is further configured to: when the quantity of the first repair resources does not meet a repair resource need of the fault, the repair information further comprises at least one of a type of a second repair resource or a granularity of the second repair resource, wherein the second repair resource is a repair resource with a second smallest granularity in the repair resource set.

10. The apparatus according to claim 9, wherein
the repair information further comprises a quantity of second repair resources.

11. The apparatus according to any one of claims 7 to 10, wherein
the fault information comprises a first type of the fault and a quantity of faults, and the first determining unit is specifically configured to:
determine a second type of the fault based on the first type of the fault and the quantity of faults.

12. The apparatus according to any one of claims 7 to 11, wherein the processing module is a processor or a BMC chip.

13. A chip, comprising at least one processor and a communication interface, wherein the processor is configured to perform the method according to any one of claims 1 to 6.

14. A computing device, comprising a processor and a memory, wherein the processor is configured to perform the method according to any one of claims 1 to 6, to repair a fault in the memory.

15. A computing device, comprising a processor, a BMC, and a memory, wherein either of the processor and the BMC is configured to perform the method according to any one of claims 1 to 6, to repair a fault in the memory.

16. A computing device, comprising a processing unit, a BIOS, and a memory, wherein
the BIOS is configured to obtain first fault information of the memory and first repair resource information;
the processing module is configured to: obtain second fault information of the memory, wherein the second fault information comprises a type of a fault; determine the type of the fault; obtain second repair resource information, wherein the second repair resource information comprises a type of a repair resource comprised in a repair resource set, and the repair resource is capable of repairing the fault; and determine repair information based on the type of the fault and the second repair resource information, wherein the repair information comprises at least one of a type of a first repair resource or a granularity of the first repair resource, and the first repair resource is a repair resource with a smallest granularity in the repair resource set; and
the BIOS is further configured to obtain the first repair information, and is configured to repair the fault based on the first repair information.

17. The computing device according to claim 16, wherein the processing module is a processor or a BMC chip.
